# EUROPEAN PATENT APPLICATION

(11) **EP 4 460 092 A1**
(43) Date of publication of application: **06.11.2024**
(21) Application number: 22913438.2
(22) Date of filing: 26.08.2022
(51) Int. Cl.: H04W 40/02

(54) **INFORMATION DETERMINATION AND CONFIGURATION METHOD AND APPARATUS, TERMINAL DEVICE AND NETWORK DEVICE**

(30) Priority: 30.12.2021 CN 202111658156
(71) Applicant: Datang Mobile Communications Equipment Co., Ltd., Beijing 100085 (CN)
(72) Inventor: ZHAO, Yali, Beijing 100085 (CN)
(74) Representative: Studio Torta S.p.A.
(86) International application number: PCT/CN2022/115147
(87) International publication number: WO 2023/124156

(57) **Abstract**

The present disclosure provides a transmission path state management method, device, UE and communication device. The method includes: a first terminal receiving first information sent by a communication device; the first terminal determining, according to the first information, an activation and/or deactivation state of all or part of transmission paths between the first terminal and the communication device. The communication device is a network device accessed by the first terminal or a target terminal communicating with the first terminal.

## Description

### CROSS-REFERENCE TO RELATED APPLICATION

The present disclosure claims the priority of Chinese Application No. 202111658156.5, filed on December 30, 2021, the disclosure of which is incorporated in its entirety by reference herein.

### TECHNICAL FIELD

The present disclosure relates to the field of communication technologies, and in particular to an information determining-configuring method, device, user equipment and network device.

### BACKGROUND

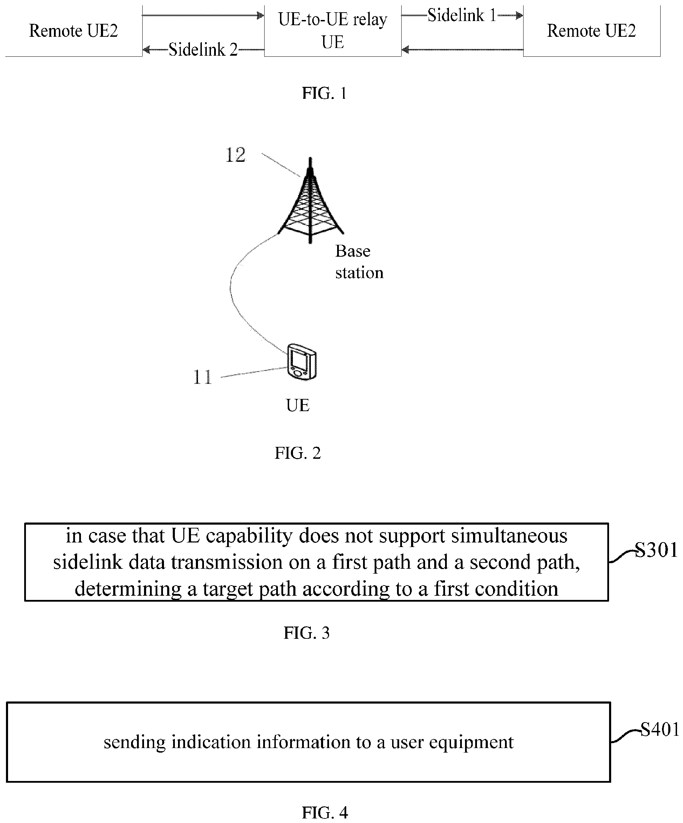

In order to expand coverage of a direct communication interface (also referred as sidelink (SL) interface or bypass interface), the fifth generation mobile communication technology (5th Generation, 5G) system may introduce UE-to-UE relay (U2U relay) in the future. After introduction of relay, for a relay UE, when the relay UE transmits data, two transmission directions correspond to different direct communication links, such as a sidelink 1 and sidelink 2 shown in FIG. 1.

In traditional direct communication, one UE may have multiple PC5 links, but there is no correlation between the multiple PC5 links. Therefore, when the UE does not support simultaneous transmission on the multiple PC5 links, the UE can select the PC5 link with the highest priority for data transmission, based on priorities of logical channels/media access control element (MAC CE) of the multiple PC5 links that currently have data transmission requirements. However, U2U relay is different from traditional direct communication, and data transmissions on two direct communication links with different transmission directions in U2U relay are likely to be related. Therefore, the processing method based totally on priorities may result in a problem that one of the direct communication links is always unable to transmit data (i.e., "starvation" often mentioned in the communication field).

### SUMMARY

Embodiments of the present disclosure provide an information determining-configuring method, device, user equipment and network device, which solve the problem that data transmission is always unable to be transmitted at a certain transmission direction or a certain direct communication link in the relay scenario.

In order to solve the above technical solution, one embodiment of the present disclosure provides an information determining method, performed by a user equipment (UE), including:
in case that UE capability does not support simultaneous sidelink data transmission on a first path and a second path, determining a target path according to a first condition;
wherein the target path is the first path or the second path, and the first path or the second path is identified by one of the following:
   a combination of a source address and a destination address of a sidelink;
   a destination address of a sidelink;
   a transmission direction corresponding to a sidelink;
   wherein the first condition includes at least one of the following:
      selecting the target path based on buffer status information corresponding to the first path and the second path, respectively;
      selecting the target path based on indication information of a network device.

Optionally, the selecting the target path based on buffer status information corresponding to the first path and the second path, respectively, includes one of the following:
selecting the target path according to a relationship between the buffer status information corresponding to the first path and the buffer status information corresponding to the second path;
selecting the target path according to a relationship between a preset buffer status threshold and each of the buffer status information corresponding to the first path and the buffer status information corresponding to the second path.

Optionally, the selecting the target path according to a relationship between the buffer status information corresponding to the first path and the buffer status information corresponding to the second path, includes:
determining, a path corresponding to the buffer status information of a larger value between the buffer status information corresponding to the first path and the buffer status information corresponding to the second path, as the target path.

Optionally, the selecting the target path according to a relationship between a preset buffer status threshold and each of the buffer status information corresponding to the first path and the buffer status information corresponding to the second path, includes at least one of the following:
in case that a second condition is met, determining a path whose buffer status information with a value greater than or equal to the preset buffer status threshold, as the target path;
in case that the second condition is not met, randomly selecting a path from the first path and the second path as the target path;
in case that the second condition is not met, comparing priority relationship between first information having a data transmission requirement and the highest priority on the first path and first information having a data transmission requirement and the highest priority on the second path, and determining a path corresponding to the first information having a higher priority as the target path;
wherein the first information is logical channel(s) and/or a media access control layer control element (MAC CE(s));
wherein the second condition includes one of the following:
   a value of the buffer status information corresponding to one of the first path and the second path is less than the preset buffer status threshold, and a value of the buffer status information corresponding to the other one of the first path and the second path is greater than or equal to the preset buffer status threshold;
   a value of the buffer status information corresponding to one of the first path and the second path is less than or equal to the preset buffer status threshold, and a value of the buffer status information corresponding to the other one of the first path and the second path is greater than the preset buffer status threshold.

Optionally, the second condition further includes one of the following:
a priority of first data on a path whose buffer status information is of a value greater than or equal to the preset buffer status threshold, is greater than or equal to a first preset threshold;
a difference between a priority of first data on a path whose buffer status information is of a value greater than or equal to the preset buffer status threshold, and a priority of first data on a path whose buffer status information is of a value less than the preset buffer status threshold, or an absolute value of the difference, is greater than a second preset threshold;
a difference between a priority of first data on a path whose buffer status information is of a value greater than the preset buffer status threshold, and a priority of first data on a path whose buffer status information is of a value less than or equal to the preset buffer status threshold, or an absolute value of the difference, is greater than a second preset threshold;
wherein the first data is a logical channel and/or MAC CE with the highest priority and having data transmission demand on the path.

Optionally, the method further includes: determining the buffer status information in one of the following:
a sum of buffer data volumes of all sidelink logical channel groups belonging to a same combination of source address and destination address on the path;
a sum of buffer data volumes of sidelink logical channel groups belonging to a same combination of source address and destination address and having priorities higher than a third preset threshold.

Optionally, the preset buffer status threshold has a configuration granularity which includes at least one of the following:
based on UE configuration;
based on logical channel group configuration;
based on configuration of logical channel group set.

Optionally, the method further includes: determining the preset buffer status threshold in a manner including at least one of the following:
pre-configured;
determining according to status of UE.

Optionally, the determining according to status of the UE, includes:
in case that the UE is in an offline state, determining to use a preconfigured preset buffer status threshold;
in case that the UE is in an online state and in a first state, determining the preset buffer status threshold according to a broadcast message sent by a network device, wherein the first state is an idle state or an inactive state;
in case that the UE is in an online state and in a connected state, determining the preset buffer status threshold according to a broadcast message or a radio resource control (RRC) signaling sent by a network device.

Optionally, the indication information is carried in sidelink grant.

Optionally, the indication information includes at least one of the following:
a combination of a sidelink source address and a sidelink destination address;
a list of combinations of a sidelink source address and a sidelink destination address.

Optionally, in case that the first condition includes selecting the target path based on indication information of a network device, the method further includes:
sending auxiliary information to a network device;
wherein the auxiliary information includes at least one of the following:
   identity information of the UE;
   sidelink target address;
   transmission direction corresponding to sidelink target address;
   a combination of sidelink source address and sidelink destination address;
   transmission direction corresponding to sidelink source address and sidelink destination address.

Optionally, the identity information of the UE includes at least one of the following:
UE-to-UE relay;
remote UE;
UE to network device relay.

Optionally, transmission mode of the auxiliary information includes any one of the following:
sidelink UE information (SUI);
UE sidelink Assistant Information (UAI);
sidelink RRC signaling.

Optionally, the determining a target path according to a first condition, includes:
for each sidelink grant or sidelink control information, determining the target path according to the first condition.

One embodiment of the present disclosure further provides an information configuring method, performed by a network device, including:
sending indication information to a user equipment (UE);
wherein the indication information is used by the UE to select a target path, wherein the target path is a first path or a second path, and the first path or the second path is identified by one of the following:
   a combination of a source address and a destination address of a sidelink;
   a destination address of a sidelink;
   a transmission direction corresponding to a sidelink.

Optionally, before sending indication information to the user equipment, the method further includes:
receiving auxiliary information sent by the UE;
wherein the auxiliary information includes at least one of the following:
   identity information of the UE;
   sidelink target address;
   transmission direction corresponding to sidelink target address;
   a combination of sidelink source address and sidelink destination address;
   transmission direction corresponding to sidelink source address and sidelink destination address.

Optionally, the identity information of the UE includes at least one of the following:
UE-to-UE relay
remote UE;
UE to network device relay.

Optionally, the sending the indication information to the user equipment, includes:
when determining that the UE is a UE-to-UE relay or a UE-to-network device relay, sending the indication information to the UE.

Optionally, transmission mode of the auxiliary information includes any one of the following:
sidelink UE information (SUI);
UE sidelink Assistant Information (UAI);
sidelink RRC signaling.

Optionally, the indication information is carried in sidelink grant.

Optionally, the indication information includes at least one of the following:
a combination of a sidelink source address and a sidelink destination address;
a list of combinations of a sidelink source address and a sidelink destination address.

One embodiment of the present disclosure provides a user equipment (UE), including a memory, a transceiver and a processor;
wherein the memory is used to store a computer program; the transceiver is used to send and receive data under control of the processor; and the processor is used to read the computer program in the memory and perform the following operations:
in case that UE capability does not support simultaneous sidelink data transmission on a first path and a second path, determining a target path according to a first condition;
wherein the target path is the first path or the second path, and the first path or the second path is identified by one of the following:
   a combination of a source address and a destination address of a sidelink;
   a destination address of a sidelink;
   a transmission direction corresponding to a sidelink;
   wherein the first condition includes at least one of the following:
      selecting the target path based on buffer status information corresponding to the first path and the second path, respectively;
      selecting the target path based on indication information of a network device.

Optionally, the processor is used to read the computer program in the memory and perform one of the following operations:
selecting the target path according to a relationship between the buffer status information corresponding to the first path and the buffer status information corresponding to the second path;
selecting the target path according to a relationship between a preset buffer status threshold and each of the buffer status information corresponding to the first path and the buffer status information corresponding to the second path.

Optionally, the processor is used to read the computer program in the memory and perform the following operations:
determining, a path corresponding to the buffer status information of a larger value between the buffer status information corresponding to the first path and the buffer status information corresponding to the second path, as the target path.

Optionally, the processor is used to read the computer program in the memory and perform at least one of the following operations:
in case that a second condition is met, determining a path whose buffer status information with a value greater than or equal to the preset buffer status threshold, as the target path;
in case that the second condition is not met, randomly selecting a path from the first path and the second path as the target path;
in case that the second condition is not met, comparing priority relationship between first information having a data transmission requirement and the highest priority on the first path and first information having a data transmission requirement and the highest priority on the second path, and determining a path corresponding to the first information having a higher priority as the target path;
wherein the first information is logical channel(s) and/or a media access control layer control element (MAC CE(s));
wherein the second condition includes one of the following:
   a value of the buffer status information corresponding to one of the first path and the second path is less than the preset buffer status threshold, and a value of the buffer status information corresponding to the other one of the first path and the second path is greater than or equal to the preset buffer status threshold;
   a value of the buffer status information corresponding to one of the first path and the second path is less than or equal to the preset buffer status threshold, and a value of the buffer status information corresponding to the other one of the first path and the second path is greater than the preset buffer status threshold.

Optionally, the second condition further includes one of the following:
a priority of first data on a path whose buffer status information is of a value greater than or equal to the preset buffer status threshold, is greater than or equal to a first preset threshold;
a difference between a priority of first data on a path whose buffer status information is of a value greater than or equal to the preset buffer status threshold, and a priority of first data on a path whose buffer status information is of a value less than the preset buffer status threshold, or an absolute value of the difference, is greater than a second preset threshold;
a difference between a priority of first data on a path whose buffer status information is of a value greater than the preset buffer status threshold, and a priority of first data on a path whose buffer status information is of a value less than or equal to the preset buffer status threshold, or an absolute value of the difference, is greater than a second preset threshold;
wherein the first data is a logical channel and/or MAC CE with the highest priority and having data transmission demand on the path.

Optionally, the buffer status information is determined in one of the following:
a sum of buffer data volumes of all sidelink logical channel groups belonging to a same combination of source address and destination address on the path;
a sum of buffer data volumes of sidelink logical channel groups belonging to a same combination of source address and destination address and having priorities higher than a third preset threshold.

Optionally, the preset buffer status threshold has a configuration granularity which includes at least one of the following:
based on UE configuration;
based on logical channel group configuration;
based on configuration of logical channel group set.

Optionally, the preset buffer status threshold is determined in a manner including at least one of the following:
pre-configured;
determining according to status of UE.

Optionally, the processor is used to read the computer program in the memory and perform at least one of the following operations:
in case that the UE is in an offline state, determining to use a preconfigured preset buffer status threshold;
in case that the UE is in an online state and in a first state, determining the preset buffer status threshold according to a broadcast message sent by a network device, wherein the first state is an idle state or an inactive state;
in case that the UE is in an online state and in a connected state, determining the preset buffer status threshold according to a broadcast message or a radio resource control (RRC) signaling sent by a network device.

Optionally, the indication information is carried in sidelink grant.

Optionally, the indication information includes at least one of the following:
a combination of a sidelink source address and a sidelink destination address;
a list of combinations of a sidelink source address and a sidelink destination address.

Optionally, in case that the first condition includes selecting the target path based on indication information of a network device, the processor is used to read the computer program in the memory and perform the following operations:
sending auxiliary information to network devices;
wherein the auxiliary information includes at least one of the following:
   identity information of the UE;
   sidelink target address;
   transmission direction corresponding to sidelink target address;
   a combination of sidelink source address and sidelink destination address;
   transmission direction corresponding to sidelink source address and sidelink destination address.

Optionally, the identity information of the UE includes at least one of the following:
UE-to-UE relay
remote UE;
UE to network device relay.

Optionally, transmission mode of the auxiliary information includes any one of the following:
sidelink UE information (SUI);
UE sidelink Assistant Information (UAI);
sidelink RRC signaling.

Optionally, the processor is used to read the computer program in the memory and perform the following operations:
for each sidelink grant or sidelink control information, determining the target path according to the first condition.

One embodiment of the present disclosure further provides a network device, including a memory, a transceiver and a processor;
wherein the memory is used to store a computer program; the transceiver is used to send and receive data under control of the processor; and the processor is used to read the computer program in the memory and perform the following operations:
sending indication information to a user equipment (UE) through the transceiver;
wherein the indication information is used by the UE to select a target path, wherein the target path is a first path or a second path, and the first path or the second path is identified by one of the following:
   a combination of a source address and a destination address of a sidelink;
   a destination address of a sidelink;
   a transmission direction corresponding to a sidelink.

Optionally, the processor is used to read the computer program in the memory and perform the following operations:
receiving auxiliary information sent by the UE;
wherein the auxiliary information includes at least one of the following:
   identity information of the UE;
   sidelink target address;
   transmission direction corresponding to sidelink target address;
   a combination of sidelink source address and sidelink destination address;
   transmission direction corresponding to sidelink source address and sidelink destination address.

Optionally, the identity information of the UE includes at least one of the following:
UE-to-UE relay
remote UE;
UE to network device relay.

Optionally, the processor is used to read the computer program in the memory and perform the following operations:
when determining that the UE is a UE-to-UE relay or a UE-to-network device relay, sending the indication information to the UE.

Optionally, transmission mode of the auxiliary information includes any one of the following:
sidelink UE information (SUI);
UE sidelink Assistant Information (UAI);
sidelink RRC signaling.

Optionally, the indication information is carried in sidelink grant.

Optionally, the indication information includes at least one of the following:
a combination of a sidelink source address and a sidelink destination address;
a list of combinations of a sidelink source address and a sidelink destination address.

One embodiment of the present disclosure further provides an information determination device, applied to a user equipment (UE), including:
a determination unit configured to, in case that UE capability does not support simultaneous sidelink data transmission on a first path and a second path, determine a target path according to a first condition;
wherein the target path is the first path or the second path, and the first path or the second path is identified by one of the following:
   a combination of a source address and a destination address of a sidelink;
   a destination address of a sidelink;
   a transmission direction corresponding to a sidelink;
   wherein the first condition includes at least one of the following:
      selecting the target path based on buffer status information corresponding to the first path and the second path, respectively;
      selecting the target path based on indication information of a network device.

One embodiment of the present disclosure further provides an information configuration device, applied to a network device, including:
a first sending unit configured to send indication information to a user equipment (UE);
wherein the indication information is used by the UE to select a target path, wherein the target path is a first path or a second path, and the first path or the second path is identified by one of the following:
   a combination of a source address and a destination address of a sidelink;
   a destination address of a sidelink;
   a transmission direction corresponding to a sidelink.

One embodiment of the present disclosure further provides a processor-readable storage medium, including a computer program stored thereon; wherein the computer program is used to cause the processor to perform the above method.

The beneficial effects of the present disclosure are as follows.

In the above technical solution, when the UE has a need to send sidelink data on the first path and the second path, the UE determines A target path according to the first condition; and then the UE transmits sidelink data through the target path, thereby avoiding the problem that data transmission is always unable to be transmitted at a certain transmission direction or a certain direct communication link in the relay scenario.

### BRIEF DESCRIPTION OF THE DRAWINGS

FIG. 1 is a schematic diagram of a U2U relay UE;
FIG. 2 is a schematic diagram of a network system applicable to an embodiment of the present disclosure;
FIG. 3 is a schematic flow chart of an information determining method applied to a user equipment according to an embodiment of the present disclosure;
FIG. 4 is a schematic flow chart of an information configuring method applied to a network device according to an embodiment of the present disclosure;
FIG. 5 is a schematic diagram showing a unit of an information determining device according to an embodiment of the present disclosure;
FIG. 6 is a schematic diagram of a user equipment according to an embodiment of the present disclosure;
FIG. 7 is a schematic diagram showing a unit of an information configuring device according to an embodiment of the present disclosure; and
FIG. 8 is a schematic diagram of a network device according to an embodiment of the present disclosure.

### DETAILED DESCRIPTION

The technical solutions in the embodiments of the present disclosure will be described hereinafter in a clear and complete manner in conjunction with the accompanying drawings of the embodiments of the present disclosure. Obviously, the following embodiments are merely a part of, rather than all of, the embodiments of the present disclosure, and based on these embodiments, a person skilled in the art may obtain the other embodiments, which also fall within the scope of the present disclosure.

Such words as "first" and "second" involved in the specification and the appended claims are merely used to differentiate different objects rather than to represent any specific order. It should be appreciated that, the data used in this way may be replaced with each other, so as to implement the embodiments in an order other than that shown in the drawings or described in the specification. In addition, such terms as "include" or "including" or any other variations involved in the present disclosure intend to provide non-exclusive coverage, so that a procedure, method, system, product or device including a series of steps or units may also include any other elements not listed herein, or may include any inherent steps or units of the procedure, method, system, product or device.

The terms "and/or" in the embodiments of the present disclosure are used to describe association relationship between associated objects, and indicate that there may be three relationships, for example, A and/or B means there are three situations, i.e., there is A alone, there are both of A and B, or, there is B alone. The character "j" generally means that relationship between associated objects before and after the character "/" is "or". The term "plurality" in the embodiments of the present disclosure means two or more, and other quantifiers are similar.

In the embodiments of the present disclosure, words such as "exemplary" or "for example" are used to indicate examples, illustrations, or descriptions. Any implementation or design described as "exemplary" or "for example" in the embodiments of the present disclosure should not be interpreted as being more preferred or more advantageous than other implementation or designs. Specifically, the use of words such as "exemplary" or "for example" is intended to present related concepts in a specific way.

The embodiments of the present disclosure will be described in conjunction with the accompanying drawings. The information determining and configuring method, device, user equipment and network device provided in the embodiments of the present disclosure can be applied to a wireless communication system. The wireless communication system can be a system using the fifth generation (5G) mobile communication technology (hereinafter referred to as a 5G system). Those skilled in the art can understand that the 5G NR system is only an example and is not a limitation.

Referring to FIG. 2, FIG. 2 is a schematic diagram of a network system applicable to an embodiment of the present disclosure. As shown in FIG. 2, the network system includes a user terminal 11 and a base station 12. The user terminal 11 may be a user equipment (UE), such as a mobile phone, a tablet personal computer, a laptop computer, a personal digital assistant (PDA for short), a mobile internet device (MID), a wearable device and other terminal-side devices. It is to be noted that the specific type of the user terminal 11 is not limited in the embodiment of the present disclosure. The base station 12 may be a base station (for example, gNB, 5G NR NB) of 5G and later versions, or a base station in other communication systems, or referred to as a node B. It is to be noted that in the embodiment of the present disclosure, only a 5G base station is taken as an example, but the specific type of the base station 12 is not limited.

Embodiments of the present disclosure provide an information determining-configuring method, device, user equipment and network device, which solve the problem that data transmission is always unable to be transmitted at a certain transmission direction or a certain direct communication link in the relay scenario.

The method and the device are based on the same application concept. Since the method and the device solve the problem in a similar principle, implementation of the device and the method can refer to each other, and the repeated parts will not be repeated.

As shown in FIG. 3, one embodiment of the present disclosure provides an information determining method, performed by a user equipment and including:
Step S301: in case that UE capability does not support simultaneous sidelink data transmission on a first path and a second path, determining a target path according to a first condition.

Optionally, this step is further implemented as follows: for each sidelink grant or sidelink control information, determining the target path according to the first condition.

That is to say, the target path is associated with each sidelink grant or sidelink control information, and the user equipment needs to determine which path the sidelink grant or sidelink control information corresponds to, based on each sidelink grant or each sidelink control information.

It is to be noted that direct communication interface grant information specifically refers to the sidelink grant, and direct communication interface control information specifically refers to the sidelink control information (SCI). If the user equipment uses a network-scheduled resource allocation mode, the sidelink grant refers to a sidelink grant obtained by the user equipment from the network device. If the user equipment uses a UE-autonomous resource selection, the sidelink grant refers to a resource selected by the UE from resource pools in system information block (SIB) broadcasted by the network or pre-configured resource pools. The SCI refers to control information sent over the sidelink for scheduling sidelink resources, and the UE can generate SCI based on the sidelink grant.

It is to be noted here that after obtaining the target path, the UE can perform sidelink data transmission on the target path.

Specifically, it is to be understood that each sidelink grant or sidelink control information corresponds to a sidelink resource. In case that UE cannot perform simultaneous sidelink data transmission on the first path and the second path, for each sidelink resource, it is necessary to determine which path the corresponding data is to be transmitted on the resource. After determining which path the data needs to be transmitted, sidelink data corresponding to the path is sent on the corresponding resource.

It is to be further noted that the target path is the first path or the second path, and the first path or the second path is identified by one of the following:
F1, a combination of a source address and a destination address of a sidelink;
F2, a destination address of a sidelink;
F3, a transmission direction corresponding to a sidelink.

It is to be noted that the UE involved in the embodiments of the present disclosure refers to a relay UE, which can be, for example, a UE-to-UE relay or a UE-to-network relay. The first path and the second path are two different sidelinks of the relay UE. The two different sidelinks can be between the relay UE and a same remote UE, or between the UE and different remote UEs.

It is to be noted that the first condition includes at least one of the following:
A11: selecting the target path based on buffer status information corresponding to the first path and the second path, respectively.

It is to be noted that the buffer status information mentioned in the present disclosure mainly refers to a size of data in the buffer.

A12: selecting the target path based on indication information of a network device.

It is to be noted that in the embodiment of the present disclosure, by adopting A11 or A12 to determine the sidelink transmission path, the path can be reasonably selected, thereby avoiding as much as possible the problem that one of the two paths cannot transmit data all the time.

A11 and A12 are described in detail hereinafter.

### 1. The first condition is A11

It is to be noted that a specific implementation of A11 in this case includes one of the following:
A111: selecting the target path according to a relationship between the buffer status information corresponding to the first path and the buffer status information corresponding to the second path.

It is to be noted here that the relationship between the buffer status information corresponding to the two paths mainly refers to a size relationship between the buffer status information corresponding to the two paths. Optionally, a specific implementation in this case includes: determining, a path corresponding to the buffer status information of a larger value between the buffer status information corresponding to the first path and the buffer status information corresponding to the second path, as the target path.

That is to say, in this case, a path corresponding to the buffer status information of a larger value between the buffer status information corresponding to the first path and the buffer status information corresponding to the second path, is directly used as the target path for sidelink data transmission. For example, the buffer status information corresponding to the first path is A, and the buffer status information corresponding to the second path is B, and a value of A is greater than a value of B, then the first path is determined as the target path.

A112: selecting the target path according to a relationship between a preset buffer status threshold and each of the buffer status information corresponding to the first path and the buffer status information corresponding to the second path.

It is to be noted here that the relationship between the preset buffer status threshold and each of the buffer status information corresponding to the two paths mainly refers to a size relationship between the preset buffer status threshold and each of the buffer status information corresponding to the two paths. Optionally, a specific implementation in this case includes at least one of the following:

A1121: in case that a second condition is met, determining a path whose buffer status information with a value greater than or equal to the preset buffer status threshold, as the target path.

It is to be noted that, optionally, the second condition includes one of the following:
X11: a value of the buffer status information corresponding to one of the first path and the second path is less than the preset buffer status threshold, and a value of the buffer status information corresponding to the other one of the first path and the second path is greater than or equal to the preset buffer status threshold.

That is to say, in this case, as long as the value of the buffer status information corresponding to one of the two paths is less than the preset buffer status threshold and the value of the buffer status information corresponding to the other path is greater than or equal to the preset buffer status threshold, the path whose buffer status information with a value greater than or equal to the preset buffer status threshold, is determined as the target path. For example, the buffer status information corresponding to the first path is A, and the buffer status information corresponding to the second path is B, and a value of A is less than the preset buffer status threshold, and a value of B is greater than the preset buffer status threshold, then the second path is determined as the target path.

X12: a value of the buffer status information corresponding to one of the first path and the second path is less than or equal to the preset buffer status threshold, and a value of the buffer status information corresponding to the other one of the first path and the second path is greater than the preset buffer status threshold.

That is to say, in this case, as long as the value of the buffer status information corresponding to one of the two paths is less than or equal to the preset buffer status threshold, and the value of the buffer status information corresponding to the other path is greater than the preset buffer status threshold, the path whose buffer status information with a value greater than or equal to the preset buffer status threshold, is directly determined as the target path. For example, the buffer status information corresponding to the first path is A, and the buffer status information corresponding to the second path is B, and a value of A is equal to the preset buffer status threshold, and a value of B is greater than the preset buffer status threshold, then the second path is determined as the target path.

A1122: in case that the second condition is not met, randomly selecting a path from the first path and the second path as the target path.

It is to be noted here that when the above second condition is not met, the UE can randomly select one of the two paths to perform transmission of sidelink data.

A1123: in case that the second condition is not met, comparing priority relationship between first information having a data transmission requirement and the highest priority on the first path and first information having a data transmission requirement and the highest priority on the second path, and determining a path corresponding to the first information having a higher priority as the target path.

It is to be noted here that when the above second condition is not met, the UE may further compare the priority relationship of the first information corresponding to the two paths, and determine the path corresponding to the first information with a higher priority as the target path. Optionally, the first information is a logical channel and/or a medium access control control element (MAC CE).

For example, the buffer status information corresponding to the first path is A, and the buffer status information corresponding to the second path is B; when values of A and B are both greater than the preset buffer status threshold or the values of A and B are both less than the preset buffer status threshold or the values of A and B are both equal to the preset buffer status threshold, then a logical channel having a data transmission requirement and the highest priority on the first path is obtained as C1, and a logical channel having a data transmission requirement and the highest priority on the second path is obtained as C2, and a priority of C1 is higher than a priority of C2, then the first path is determined as the target path for transmitting sidelink data.

Optionally, it is to be noted that on the basis that the second condition includes a value of the buffer status information corresponding to one of the first path and the second path is less than the preset buffer status threshold, and a value of the buffer status information corresponding to the other one of the first path and the second path is greater than or equal to the preset buffer status threshold, the second condition may further include one of the following:

B11: a priority of first data on a path whose buffer status information is of a value greater than or equal to the preset buffer status threshold, is greater than or equal to a first preset threshold.

It is to be noted here that the first data refers to a logical channel and/or MAC CE with the highest priority and having data transmission demand on the path.

That is to say, in this case, when a value of the buffer status information corresponding to one of the first path and the second path is less than the preset buffer status threshold and a value of the buffer status information corresponding to the other one of the first path and the second path is greater than or equal to the preset buffer status threshold, or, when a value of the buffer status information corresponding to one of the first path and the second path is less than or equal to the preset buffer status threshold and a value of the buffer status information corresponding to the other one of the first path and the second path is greater than the preset buffer status threshold, it is necessary to further determine whether a priority of the first data on the path whose buffer status information is of a value greater than or equal to the preset buffer status threshold, is greater than or equal to a first preset threshold, or determine whether a priority of the first data on the path whose buffer status information is of a value greater than the preset buffer status threshold, is greater than or equal to a first preset threshold. Only when a priority of the first data on the path whose buffer status information is of a value greater than or equal to the preset buffer status threshold, is greater than or equal to a first preset threshold, or a priority of the first data on the path whose buffer status information is of a value greater than the preset buffer status threshold, is greater than or equal to a first preset threshold, the path corresponding to the buffer status information of a larger value between the buffer status information corresponding to the first path and the buffer status information corresponding to the second path, is determined as the target path.

For example, the buffer status information corresponding to the first path is A, and the buffer status information corresponding to the second path is B; the value of A is less than the preset buffer status threshold, and the value of B is greater than the preset buffer status threshold; the logical channel having a data transmission requirement and the highest priority on the second path is obtained as C2; if the priority of C2 is higher than the first preset threshold, the second path is determined as the target path.

B 12: a difference between a priority of first data on a path whose buffer status information is of a value greater than or equal to the preset buffer status threshold, and a priority of first data on a path whose buffer status information is of a value less than the preset buffer status threshold, or an absolute value of the difference, is greater than a second preset threshold.

That is to say, in this case, when the value of the buffer status information corresponding to one of the first path and the second path is less than the preset buffer status threshold, and the value of the buffer status information corresponding to the other path is greater than or equal to the preset buffer status threshold, it is necessary to further determine whether a difference (or an absolute value of the difference) between a priority of first data on a path whose buffer status information is of a value greater than or equal to the preset buffer status threshold, and a priority of first data on a path whose buffer status information is of a value less than the preset buffer status threshold, is greater than a second preset threshold. Only when the difference (or the absolute value of the difference) is greater than the second preset threshold, the path corresponding to the buffer status information of a larger value between the buffer status information corresponding to the first path and the buffer status information corresponding to the second path, is determined as the target path.

For example, the buffer status information corresponding to the first path is A, and the buffer status information corresponding to the second path is B; the value of A is less than the preset buffer status threshold, and the value of B is greater than the preset buffer status threshold; a logical channel having a data transmission requirement and the highest priority on the first path is obtained as C1, and a logical channel having a data transmission requirement and the highest priority on the second path is obtained as C2; if a priority of C2 is higher than a priority of C1 and a difference between the priorities of C2 and C1 is greater than the second preset threshold, then the second path is determined as the target path.

B13: a difference between a priority of first data on a path whose buffer status information is of a value greater than the preset buffer status threshold, and a priority of first data on a path whose buffer status information is of a value less than or equal to the preset buffer status threshold, or an absolute value of the difference, is greater than a second preset threshold.

It is to be noted that the implementation of this case is similar to that of B 12 and will not be described in detail here.

Optionally, the above buffer status information on each path may be determined in a manner including one of the following:
D11: a sum of buffer data volumes of all sidelink logical channel groups belonging to a same combination of source address and destination address on the path;
D12: a sum of buffer data volumes of sidelink logical channel groups belonging to a same combination of source address and destination address and having priorities higher than a third preset threshold.

It is to be noted here that the manners for determining the buffer status information on different paths may be the same or different. For example, the buffer status information of each of the first path and the second path can be determined in the manner of D11 or D12; or, the buffer status information of the first path is determined in the manner of D11, and the buffer status information of the second path is determined in the manner of D12; or, the buffer status information of the first path is determined in the manner of D12, and the buffer status information of the second path is determined in the manner of D 11.

Optionally, the preset buffer status threshold has a configuration granularity which includes at least one of the following:
E11: based on UE configuration;
E12: based on logical channel group configuration;
E13: based on configuration of logical channel group set.

Optionally, the preset buffer status threshold is determined in a manner including at least one of the following:
F11: pre-configured;
F12: determining according to status of UE.

It is to be further noted that, in this case, a specific manner of determining the preset buffer status threshold includes at least one of the following:
F121: in case that the UE is in an offline state, determining to use a preconfigured preset buffer status threshold;
F121: in case that the UE is in an online state and in a first state, determining the preset buffer status threshold according to a broadcast message sent by a network device.

For example, the broadcast message may be a SIB message.

It is to be noted that the first state is an idle state or an inactive state.

F123: in case that the UE is in an online state and in a connected state, determining the preset buffer status threshold according to a broadcast message or a radio resource control (RRC) signaling sent by a network device.

For example, the RRC signaling may be a dedicated RRC signaling.

### 2. The first condition is A12

It is to be noted that, in this case, the indication information is carried in sidelink grant.

Optionally, the indication information includes at least one of the following:
H11: a combination of a sidelink source address and a sidelink destination address;
H12: a list of combinations of a sidelink source address and a sidelink destination address.

Optionally, in order to enable the network device to send relatively accurate indication information based on the UE, in this case, the method further includes:
sending, by the UE, auxiliary information to a network device;
where the auxiliary information includes at least one of the following:
   J11: identity information of the UE;
   It is to be noted that the identity information mainly indicates the role of the UE in the relay scenario, and the roles include: relay UE or remote UE.

Optionally, the identity information of the UE includes at least one of the following:
J111: UE-to-UE relay;
   That is to say, at this point, the UE is a relay UE applied to a UE-to-UE relay scenario.
J112: remote UE;
J113: UE to network device relay.

That is to say, at this point, the UE is a relay UE applied to the UE to network device relay scenario.

It is to be noted that the identity information of the UE is used to assist the network device in determining whether to send the indication information. Optionally, the network device sends the indication information to the UE only when it determines that the UE is a UE-to-UE relay or a UE-to-network device relay.
J12: sidelink target address;
J13: transmission direction corresponding to sidelink target address;
J14: a combination of sidelink source address and sidelink destination address;
J15: transmission direction corresponding to sidelink source address and sidelink destination address.

Optionally, transmission mode of the auxiliary information includes any one of the following:
K11: sidelink UE information (SUI);
K12: UE sidelink Assistant Information (UAI);
K13: sidelink RRC signaling.

It is to be noted that the sidelink RRC signaling is an uplink RRC signaling newly introduced in the embodiment of the present disclosure and used to transmit the auxiliary information.

The specific application of the present disclosure is illustrated hereinafter by way of example.

Specific application scenario 1: by taking a path represented by a sidelink as an example, a link for transmitting sidelink data is determined based on that a value of buffer status information corresponding to one sidelink is less than a preset buffer status threshold and a value of buffer status information corresponding to another sidelink is greater than or equal to the preset buffer status threshold.

In this case, as shown in FIG. 1, a remote UE1 and a remote UE2 establish an UE-to-UE relay connection through U2U relay UE. Sideink 1 is a transmission sidelink from the U2U relay UE to the remote UE2. Sidelink 2 is a transmission sidelink from the U2U relay UE to the remote UE1. The sidelink 1 and the sidelink 2 correspond to two different transmission directions of the U2U relay UE, respectively.

The U2U relay UE receives sidelink (SL) grant. Assuming that both the sidelink 1 and the sidelink 2 have sidelink data transmission requirements, for each SL grant, the U2U relay UE can determine on which sidelink to perform sidelink data transmission based on specific rules.

The specific rules are as follows:
M11: in case that the value of the buffer status information of one of the sidelink 1 and the sidelink 2 is less than the preset buffer status threshold, and the value of the buffer status information of the other one is greater than or equal to the preset buffer status threshold, the sidelink whose buffer status information of a value being greater than the preset buffer status threshold is used as the sidelink selected by the UE;
M12: for other situations (for example, the values of the buffer status information of the sidelink 1 and the sidelink 2 are both less than or greater than the preset buffer status threshold), a sidelink is randomly selected from the sidelink 1 and the sidelink 2 for data transmission;
M13: for other situations (for example, the values of the buffer status information of the sidelink 1 and the sidelink 2 are both less than or greater than the preset buffer status threshold), directly comparing priorities of logical channels and/or MAC CEs having data transmission requirements and the highest priorities on the sidelink 1 and the sidelink 2, and taking a sidelink corresponding to the logical channel and/or MAC CE with the higher priority among the sidelink 1 and the sidelink 2 as the sidelink selected by the UE.

Specific application scenario 2: by taking a path represented by a sidelink as an example, a link for transmitting sidelink data is determined based on that a value of buffer status information corresponding to one sidelink is less than a preset buffer status threshold and a value of buffer status information corresponding to another sidelink is greater than or equal to the preset buffer status threshold, and a priority of a logical channel and/or MAC CE having a data transmission requirement and the highest priority on a sidelink whose corresponding buffer status information of a value being greater than or equal to the preset buffer status threshold, is higher than a preset priority threshold 1.

In this case, as shown in FIG. 1, a remote UE1 and a remote UE2 establish an UE-to-UE relay connection through a U2U relay UE. Sidelink 1 is a transmission sidelink from the U2U relay UE to the remote UE2; sidelink 2 is a transmission sidelink from the U2U relay UE to the remote UE1. The sidelink 1 and the sidelink 2 correspond to two different transmission directions of the U2U relay UE, respectively.

The U2U relay UE receives the SL grant. Assuming that both the sidelink 1 and the sidelink 2 have sidelink data transmission requirements, for each SL grant, the U2U relay UE can determine on which sidelink to perform sidelink data transmission based on specific rules.

The specific rules are as follows:
N11: in case that a value of the buffer status information of one of the sidelink 1 and the sidelink 2 is less than the preset buffer status threshold, and the value of the buffer status information of the other one is greater than or equal to the preset buffer status threshold, as well as a priority of a logical channel and/or MAC CE having a data transmission requirement and the highest priority on a sidelink whose corresponding buffer status information of a value being greater than or equal to the preset buffer status threshold, is higher than a preset priority threshold 1, then the sidelink whose buffer status information of a value being greater than the preset buffer status threshold is used as the sidelink selected by the UE;
N12: for other situations (for example, the values of the buffer status information of the sidelink 1 and the sidelink 2 are both less than or greater than the preset buffer status threshold), a sidelink is randomly selected from the sidelink 1 and the sidelink 2 for data transmission;
N12: for other situations (for example, the values of the buffer status information of the sidelink 1 and the sidelink 2 are both less than or greater than the preset buffer status threshold), directly comparing priorities of logical channels and/or MAC CEs having data transmission requirements and the highest priorities on the sidelink 1 and the sidelink 2, and taking a sidelink corresponding to the logical channel and/or MAC CE with the higher priority among the sidelink 1 and the sidelink 2 as the sidelink selected by the UE.

Specific application scenario 3: by taking a path represented by a sidelink as an example, a link for transmitting sidelink data is determined based on indication information of the network device.

In this case, as shown in FIG. 1, a remote UE1 and a remote UE2 establish an UE-to-UE relay connection through U2U relay UE. Sideink 1 is a transmission sidelink from the U2U relay UE to the remote UE2. Sidelink 2 is a transmission sidelink from the U2U relay UE to the remote UE1. The sidelink 1 and the sidelink 2 correspond to two different transmission directions of the U2U relay UE, respectively.

In order to obtain SL grant, the U2U relay UE needs to report auxiliary information to the network (i.e., a base station), and the auxiliary information may be SUI, or UAI, or a newly introduced Uu interface RRC signaling.

Optionally, the auxiliary information includes at least one of the following: identity information of the UE, sidelink target address, transmission direction corresponding to sidelink target address, a combination of sidelink source address and sidelink destination address, and transmission direction corresponding to sidelink source address and sidelink destination address.

The identity information may be used to determine whether the UE is a U2U relay UE.

If the network determines that the U2U relay UE uses the network-scheduled resource allocation mode (i.e., mode 1), a SL grant may be allocated to the U2U relay UE according to sidelink-buffer status reporting (SL-BSR) reported by the U2U relay UE.

The U2U relay UE receives the SL grant. Assuming that both the sidelink 1 and the sidelink 2 have sidelink data transmission requirements, for each SL grant, the U2U relay UE can determine on which sidelink to perform sidelink data transmission based on the indication information of the network device.

Specifically, when the network device sends a SL grant to the U2U relay UE, the SL grant needs to include indication information of transmission direction or sidelink. The indication information may indicate in a manner such as, but not limited to, indicating a combination of a sidelink source address and a sidelink destination address, or a list of combinations of a sidelink source address and a sidelink destination address for the SL grant in the SL grant.

It is to be noted that the technical solution of the embodiment of the present disclosure can solve the problem of "starvation" of a sideink that may occur in a relay scenario.

The technical solution of the embodiment of the present disclosure may be applied to various systems, especially a 5G system, e.g., Global System of Mobile communication (GSM), Code Division Multiple Access (CDMA) system, Wideband Code Division Multiple Access (WCDMA) system, General Packet Radio Service (GPRS) system, Long Term Evolution (LTE) system, LTE Frequency Division Duplexing (FDD) system, LTE Time Division Duplexing (TDD) system, Long Term Evolution Advanced (LTE-A) system, Universal Mobile Telecommunication System (UMTS), Worldwide Interoperability for Microwave Access (WiMAX) system, or 5th-Generation (5G) New Radio (NR) system. Each of these systems includes a terminal device and a network device. Each system further includes a core network part, e.g., an Evolved Packet System (EPS) or 5G system (SGS).

The terminal involved in the embodiments of the present disclosure is a device for providing voice data and/or any other service data to a user, e.g., a handheld device having a wireless connection function, or any other processing device capable of being connected to a wireless modem. In different systems, the terminal device may have different names. For example, in a 5G system, the terminal device is called as User Equipment (UE). A wireless terminal device communicates with one or more Core Networks (CNs) via a Radio Access Network (RAN). The wireless terminal device may be a mobile terminal, e.g., a mobile phone (or cellular phone), or a computer having the mobile terminal device, e.g., a portable, pocket-sized, handheld, built-in or vehicle-mounted mobile device, which are capable of exchanging voice and/or data with the RAN. For example, the wireless terminal device may be a Personal Communication Service (PCS) telephone, a cordless telephone, a Session Initiation Protocol (SIP) phone, a Wireless Local Loop (WLL) station, or a Personal Digital Assistant (PDA). In addition, the wireless terminal device may also be called as system, subscriber unit, subscriber station, mobile station, mobile, remote station, remote terminal, access terminal, user terminal, user agent or user device, which will not be particularly defined herein.

The network device involved in the embodiments of the present disclosure may be a base station which includes a plurality of cells providing services for the terminal. Depending on different application scenarios, the base station is called as an access point, a device in an access network in communication with the wireless terminal device through one or more sectors on an air interface, or any other name. The network device is used to exchange a received air frame with an Internet Protocol (IP) packet, and it serves as a router between the wireless terminal device and the other part of the access network. The other part of the access network includes an IP communication network. The network device may further coordinate attribute management on the air interface. For example, the network device involved in the embodiments of the present disclosure is a Base Transceiver Station (BTS) in the GSM or CDMA system, a NodeB in the WCDMA system, an evolutional Node B (eNB, or e-NodeB) in the LTE system, a 5G base station (gNB) in 5G network architecture (next generation system), a Home evolved Node B (HeNB), a relay node, a femto, or a pico, which will not be particularly defined herein. In some network structures, the network device includes a Centralized Unit (CU) and a Distributed Unit (DU), which may be geographically separated from each other.

Multi Input Multi Output (MIMO) transmission is performed between the network device and the terminal each with one or more antennae, and the MIMO transmission is Single User MIMO (SU-MIMO) or Multiple User MIMO (MU-MIMO). Depending on the form of an antenna combination and the quantity of antennae, the MIMO transmission may be 2D-MIMO, 3D-MIMO, FD-MIMO or massive-MIMO, and it may also be diversity transmission, precoding transmission or beam-forming transmission.

Corresponding to implementation on the user equipment, as shown in FIG. 4, one embodiment of the present disclosure provides an information configuring method, performed by a network device and including:
Step S401: sending indication information to a user equipment (UE).

The indication information is used by the UE to select a target path, where the target path is a first path or a second path, and the first path or the second path is identified by one of the following:
a combination of a source address and a destination address of a sidelink;
a destination address of a sidelink;
a transmission direction corresponding to a sidelink.

Optionally, before sending indication information to the user equipment, the method further includes:
receiving auxiliary information sent by the UE;
where the auxiliary information includes at least one of the following:
   identity information of the UE;
   sidelink target address;
   transmission direction corresponding to sidelink target address;
   a combination of sidelink source address and sidelink destination address;
   transmission direction corresponding to sidelink source address and sidelink destination address.

Optionally, the identity information of the UE includes at least one of the following:
UE-to-UE relay
remote UE;
UE to network device relay.

Optionally, the sending the indication information to the UE includes:
when determining that the UE is a UE-to-UE relay or a UE-to-network device relay, sending the indication information to the UE.

Optionally, transmission mode of the auxiliary information includes any one of the following:
sidelink UE information (SUI);
UE sidelink Assistant Information (UAI);
sidelink RRC signaling.

Optionally, the indication information is carried in sidelink grant.

Optionally, the indication information includes at least one of the following:
a combination of a sidelink source address and a sidelink destination address;
a list of combinations of a sidelink source address and a sidelink destination address.

It is to be noted that all descriptions about the network device in the above embodiments are applicable to the embodiments of the information configuring method applied to the network device, and can achieve the same technical effects.

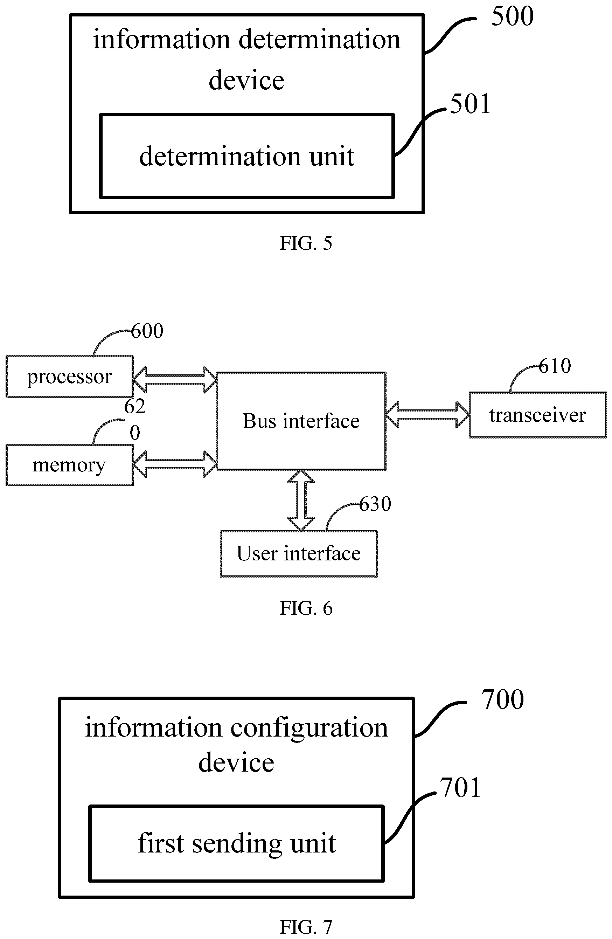

As shown in FIG. 5, one embodiment of the present disclosure provides an information determination device 500, which is applied to a user equipment (UE) and includes:
a determination unit 501 configured to, in case that UE capability does not support simultaneous sidelink data transmission on a first path and a second path, determine a target path according to a first condition;
where the target path is the first path or the second path, and the first path or the second path is identified by one of the following:
   a combination of a source address and a destination address of a sidelink;
   a destination address of a sidelink;
   a transmission direction corresponding to a sidelink;
   wherein the first condition includes at least one of the following:
      selecting the target path based on buffer status information corresponding to the first path and the second path, respectively;
      selecting the target path based on indication information of a network device.

Optionally, the selecting the target path based on buffer status information corresponding to the first path and the second path, respectively, includes one of the following:
selecting the target path according to a relationship between the buffer status information corresponding to the first path and the buffer status information corresponding to the second path;
selecting the target path according to a relationship between a preset buffer status threshold and each of the buffer status information corresponding to the first path and the buffer status information corresponding to the second path.

Optionally, the selecting the target path according to a relationship between the buffer status information corresponding to the first path and the buffer status information corresponding to the second path, includes:
determining, a path corresponding to the buffer status information of a larger value between the buffer status information corresponding to the first path and the buffer status information corresponding to the second path, as the target path.

Optionally, the selecting the target path according to a relationship between a preset buffer status threshold and each of the buffer status information corresponding to the first path and the buffer status information corresponding to the second path, includes at least one of the following:
in case that a second condition is met, determining a path whose buffer status information with a value greater than or equal to the preset buffer status threshold, as the target path;
in case that the second condition is not met, randomly selecting a path from the first path and the second path as the target path;
in case that the second condition is not met, comparing priority relationship between first information having a data transmission requirement and the highest priority on the first path and first information having a data transmission requirement and the highest priority on the second path, and determining a path corresponding to the first information having a higher priority as the target path;
wherein the first information is logical channel(s) and/or a media access control layer control element (MAC CE(s));
wherein the second condition includes one of the following:
a value of the buffer status information corresponding to one of the first path and the second path is less than the preset buffer status threshold, and a value of the buffer status information corresponding to the other one of the first path and the second path is greater than or equal to the preset buffer status threshold;
a value of the buffer status information corresponding to one of the first path and the second path is less than or equal to the preset buffer status threshold, and a value of the buffer status information corresponding to the other one of the first path and the second path is greater than the preset buffer status threshold.

Optionally, the second condition further includes one of the following:
a priority of first data on a path whose buffer status information is of a value greater than or equal to the preset buffer status threshold, is greater than or equal to a first preset threshold;
a difference between a priority of first data on a path whose buffer status information is of a value greater than or equal to the preset buffer status threshold, and a priority of first data on a path whose buffer status information is of a value less than the preset buffer status threshold, or an absolute value of the difference, is greater than a second preset threshold;
a difference between a priority of first data on a path whose buffer status information is of a value greater than the preset buffer status threshold, and a priority of first data on a path whose buffer status information is of a value less than or equal to the preset buffer status threshold, or an absolute value of the difference, is greater than a second preset threshold;
wherein the first data is a logical channel and/or MAC CE with the highest priority and having data transmission demand on the path.

Optionally, the buffer status information is determined in one of the following:
a sum of buffer data volumes of all sidelink logical channel groups belonging to a same combination of source address and destination address on the path;
a sum of buffer data volumes of sidelink logical channel groups belonging to a same combination of source address and destination address and having priorities higher than a third preset threshold.

Optionally, the preset buffer status threshold has a configuration granularity which includes at least one of the following:
based on UE configuration;
based on logical channel group configuration;
based on configuration of logical channel group set.

Optionally, the preset buffer status threshold is determined in a manner including at least one of the following:
pre-configured;
determining according to status of UE.

Optionally, the determining according to status of the UE, includes:
in case that the UE is in an offline state, determining to use a preconfigured preset buffer status threshold;
in case that the UE is in an online state and in a first state, determining the preset buffer status threshold according to a broadcast message sent by a network device, wherein the first state is an idle state or an inactive state;
in case that the UE is in an online state and in a connected state, determining the preset buffer status threshold according to a broadcast message or a radio resource control (RRC) signaling sent by a network device.

Optionally, the indication information is carried in sidelink grant.

Optionally, the indication information includes at least one of the following:
a combination of a sidelink source address and a sidelink destination address;
a list of combinations of a sidelink source address and a sidelink destination address.

Optionally, in case that the first condition includes selecting the target path based on indication information of a network device, the device further includes:
a second sending unit configured to send auxiliary information to a network device;
wherein the auxiliary information includes at least one of the following:
   identity information of the UE;
   sidelink target address;
   transmission direction corresponding to sidelink target address;
   a combination of sidelink source address and sidelink destination address;
   transmission direction corresponding to sidelink source address and sidelink destination address.

Optionally, the identity information of the UE includes at least one of the following:
UE-to-UE relay
remote UE;
UE to network device relay.

Optionally, transmission mode of the auxiliary information includes any one of the following:
sidelink UE information (SUI);
UE sidelink Assistant Information (UAI);
sidelink RRC signaling.

Optionally, the determination unit 501 is specifically configured to, for each sidelink grant or sidelink control information, determine the target path according to the first condition.

It is to be noted that the device embodiment is a device that corresponds to the above method embodiment in a one-to-one manner, and all implementation in the above method embodiment are applicable to the device embodiment and can achieve the same technical effect.

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

As shown in FIG. 6, one embodiment of the present disclosure further provides a user equipment (UE), including a processor 600, a transceiver 610, a memory 620, and a program stored in the memory 620 and executable on the processor 600. The transceiver 610 is connected to the processor 600 and the memory 620 through a bus interface. The processor 600 is used to read the program in the memory and perform the following process:
in case that UE capability does not support simultaneous sidelink data transmission on a first path and a second path, determining a target path according to a first condition;
where the target path is the first path or the second path, and the first path or the second path is identified by one of the following:
   a combination of a source address and a destination address of a sidelink;
   a destination address of a sidelink;
   a transmission direction corresponding to a sidelink;
   where the first condition includes at least one of the following:
      selecting the target path based on buffer status information corresponding to the first path and the second path, respectively;
      selecting the target path based on indication information of a network device.

The transceiver 610 is configured to receive and send data under the control of the processor 600.

In FIG. 6, a bus architecture may include any number of interconnected bus and bridge. Specifically, various circuits of one or more processors, which are represented by the processor 600, and one or more memories, which are represented by the memory 620, are linked together. The bus architecture may link various other circuits, such as a peripheral device, voltage regulator and a power management circuit together. These features are well known in this field; therefore, this disclosure does not make further description on these features. The bus interface provides an interface. The transceiver 610 may be multiple elements, including a transmitter and a receiver and provide units, which communicate with other devices on the transmission medium. The transmission medium includes radio channels, wired channels, optical cables, etc. For different UEs, a user interface 630 may be an interface that can be connected to external or internal devices. The connected devices include but are not limited to a small keyboard, a display, a speaker, a microphone, a joystick, etc.

The processor 600 is responsible for managing the bus architecture and the normal processing. The memory 620 may be used to store data used by the processor 600 for performing operations.

Optionally, the processor 600 may be a central processing unit (CPU), an application specific integrated circuit (ASIC), a field-programmable gate array (FPGA) or a complex programmable logic device (CPLD). The processor may also adopt multi-core architecture.

The processor calls the computer program stored in the memory to execute any of the methods provided by the embodiments of the present disclosure according to obtained executable instructions. The processor and the memory may also be arranged physically separately.

Further, the processor is further used to read the computer program in the memory and perform one of the following operations:
selecting the target path according to a relationship between the buffer status information corresponding to the first path and the buffer status information corresponding to the second path;
selecting the target path according to a relationship between a preset buffer status threshold and each of the buffer status information corresponding to the first path and the buffer status information corresponding to the second path.

Further, the processor is further used to read the computer program in the memory and perform one of the following operations:
determining, a path corresponding to the buffer status information of a larger value between the buffer status information corresponding to the first path and the buffer status information corresponding to the second path, as the target path.

Further, the processor is used to read the computer program in the memory and perform at least one of the following operations:
in case that a second condition is met, determining a path whose buffer status information with a value greater than or equal to the preset buffer status threshold, as the target path;
in case that the second condition is not met, randomly selecting a path from the first path and the second path as the target path;
in case that the second condition is not met, comparing priority relationship between first information having a data transmission requirement and the highest priority on the first path and first information having a data transmission requirement and the highest priority on the second path, and determining a path corresponding to the first information having a higher priority as the target path;
wherein the first information is logical channel(s) and/or a media access control layer control element (MAC CE(s));
wherein the second condition includes one of the following:
   a value of the buffer status information corresponding to one of the first path and the second path is less than the preset buffer status threshold, and a value of the buffer status information corresponding to the other one of the first path and the second path is greater than or equal to the preset buffer status threshold;
   a value of the buffer status information corresponding to one of the first path and the second path is less than or equal to the preset buffer status threshold, and a value of the buffer status information corresponding to the other one of the first path and the second path is greater than the preset buffer status threshold.

Further, the second condition further includes one of the following:
a priority of first data on a path whose buffer status information is of a value greater than or equal to the preset buffer status threshold, is greater than or equal to a first preset threshold;
a difference between a priority of first data on a path whose buffer status information is of a value greater than or equal to the preset buffer status threshold, and a priority of first data on a path whose buffer status information is of a value less than the preset buffer status threshold, or an absolute value of the difference, is greater than a second preset threshold;
a difference between a priority of first data on a path whose buffer status information is of a value greater than the preset buffer status threshold, and a priority of first data on a path whose buffer status information is of a value less than or equal to the preset buffer status threshold, or an absolute value of the difference, is greater than a second preset threshold;
wherein the first data is a logical channel and/or MAC CE with the highest priority and having data transmission demand on the path.

Further, the buffer status information is determined in one of the following:
a sum of buffer data volumes of all sidelink logical channel groups belonging to a same combination of source address and destination address on the path;
a sum of buffer data volumes of sidelink logical channel groups belonging to a same combination of source address and destination address and having priorities higher than a third preset threshold.

Further, the preset buffer status threshold has a configuration granularity which includes at least one of the following:
based on UE configuration;
based on logical channel group configuration;
based on configuration of logical channel group set.

Further, the preset buffer status threshold is determined in a manner including at least one of the following:
pre-configured;
determining according to status of UE.

Further, the processor is used to read the computer program in the memory and perform at least one of the following operations:
in case that the UE is in an offline state, determining to use a preconfigured preset buffer status threshold;
in case that the UE is in an online state and in a first state, determining the preset buffer status threshold according to a broadcast message sent by a network device, wherein the first state is an idle state or an inactive state;
in case that the UE is in an online state and in a connected state, determining the preset buffer status threshold according to a broadcast message or a radio resource control (RRC) signaling sent by a network device.

Further, the indication information is carried in sidelink grant.

Further, the indication information includes at least one of the following:
a combination of a sidelink source address and a sidelink destination address;
a list of combinations of a sidelink source address and a sidelink destination address.

Further, in case that the first condition includes selecting the target path based on indication information of a network device, the processor is used to read the computer program in the memory and perform the following operations:
sending auxiliary information to network devices;
wherein the auxiliary information includes at least one of the following:
   identity information of the UE;
   sidelink target address;
   transmission direction corresponding to sidelink target address;
   a combination of sidelink source address and sidelink destination address;
   transmission direction corresponding to sidelink source address and sidelink destination address.

Further, the identity information of the UE includes at least one of the following:
UE-to-UE relay
remote UE;
UE to network device relay.

Further, transmission mode of the auxiliary information includes any one of the following:
sidelink UE information (SUI);
UE sidelink Assistant Information (UAI);
sidelink RRC signaling.

Optionally, the processor is used to read the computer program in the memory and perform the following operations:
for each sidelink grant or sidelink control information, determining the target path according to the first condition.

It is to be noted here that the above user equipment provided in the embodiment of the present disclosure can implement all the method steps implemented in the above method embodiment, and can achieve the same technical effect. The parts and beneficial effects of this embodiment that are the same as the method embodiment will not be described in detail here.

One embodiment of the present disclosure further provides a computer-readable storage medium, which includes a computer program stored thereon. The computer program is used to cause a processor to execute the foregoing information determining method applied to the UE. The processor-readable storage medium may be any available medium or data storage device that can be accessed by a processor, including but not limited to magnetic storage (such as floppy disk, hard disk, magnetic tape, magneto-optical disk (MO)), optical storage (such as CD, DVD, BD, HVD), and semiconductor memory (such as ROM, EPROM, EEPROM, non-volatile memory (Nand flash), solid-state drive (SSD)).

As shown in FIG. 7, one embodiment of the present disclosure provides an information configuration device 700, which is applied to a network device, including:
a first sending unit 701 configured to send indication information to a user equipment (UE);
wherein the indication information is used by the UE to select a target path, wherein the target path is a first path or a second path, and the first path or the second path is identified by one of the following:
   a combination of a source address and a destination address of a sidelink;
   a destination address of a sidelink;
   a transmission direction corresponding to a sidelink.

Optionally, before sending indication information to the user equipment, the device is further configured to
receive auxiliary information sent by the UE;
wherein the auxiliary information includes at least one of the following:
   identity information of the UE;
   sidelink target address;
   transmission direction corresponding to sidelink target address;
   a combination of sidelink source address and sidelink destination address;
   transmission direction corresponding to sidelink source address and sidelink destination address.

Optionally, the identity information of the UE includes at least one of the following:
UE-to-UE relay
remote UE;
UE to network device relay.

Optionally, the sending the indication information to the user equipment, includes:
when determining that the UE is a UE-to-UE relay or a UE-to-network device relay, sending the indication information to the UE.

Optionally, transmission mode of the auxiliary information includes any one of the following:
sidelink UE information (SUI);
UE sidelink Assistant Information (UAI);
sidelink RRC signaling.

Optionally, the indication information is carried in sidelink grant.

Optionally, the indication information includes at least one of the following:
a combination of a sidelink source address and a sidelink destination address;
a list of combinations of a sidelink source address and a sidelink destination address.

It is to be noted that the network device embodiment is a network device that corresponds to the above method embodiment in a one-to-one manner, and all implementations in the above method embodiment are applicable to the embodiment of the network device and can achieve the same technical effect.

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

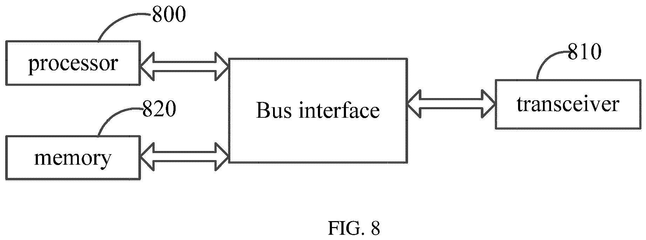

As shown in FIG. 8, one embodiment of the present disclosure further provides a network device, including a processor 800, a transceiver 810, a memory 820, and a program stored in the memory 820 and executable on the processor 800. The transceiver 810 is connected to the processor 800 and the memory 820 through a bus interface. The processor 800 is used to read the program in the memory and perform the following process:
sending indication information to a user equipment (UE) through the transceiver 810;
where the indication information is used by the UE to select a target path, wherein the target path is a first path or a second path, and the first path or the second path is identified by one of the following:
   a combination of a source address and a destination address of a sidelink;
   a destination address of a sidelink;
   a transmission direction corresponding to a sidelink.

The transceiver 810 is configured to receive and send data under the control of the processor 800.

In FIG. 8, a bus architecture may include any number of interconnected bus and bridge. Specifically, various circuits of one or more processors, which are represented by the processor 800, and one or more memories, which are represented by the memory 820, are linked together. The bus architecture may link various other circuits, such as a peripheral device, voltage regulator and a power management circuit together. These features are well known in this field; therefore, this disclosure does not make further description on these features. The bus interface provides an interface. The transceiver 810 may be multiple elements, including a transmitter and a receiver and provide units, which communicate with other devices on the transmission medium. The transmission medium includes radio channels, wired channels, optical cables, etc. The processor 800 is responsible for managing the bus architecture and the normal processing. The memory 820 may be used to store data used by the processor 800 for performing operations.

Optionally, the processor 800 may be a central processing unit (CPU), an application specific integrated circuit (ASIC), a field-programmable gate array (FPGA) or a complex programmable logic device (CPLD). The processor may also adopt multi-core architecture.

Further, the processor is used to read the computer program in the memory and perform the following operations:
receiving auxiliary information sent by the UE;
wherein the auxiliary information includes at least one of the following:
   identity information of the UE;
   sidelink target address;
   transmission direction corresponding to sidelink target address;
   a combination of sidelink source address and sidelink destination address;
   transmission direction corresponding to sidelink source address and sidelink destination address.

Further, the identity information of the UE includes at least one of the following:
UE-to-UE relay
remote UE;
UE to network device relay.

Further, the processor is used to read the computer program in the memory and perform the following operations:
when determining that the UE is a UE-to-UE relay or a UE-to-network device relay, sending the indication information to the UE.

Further, transmission mode of the auxiliary information includes any one of the following:
sidelink UE information (SUI);
UE sidelink Assistant Information (UAI);
sidelink RRC signaling.

Further, the indication information is carried in sidelink grant.

Further, the indication information includes at least one of the following:
a combination of a sidelink source address and a sidelink destination address;
a list of combinations of a sidelink source address and a sidelink destination address.

It is to be noted here that the above network device provided in the embodiment of the present disclosure can implement all the method steps implemented in the above method embodiment, and can achieve the same technical effect. The parts and beneficial effects of this embodiment that are the same as those in the method embodiment will not be described in detail here.

One embodiment of the present disclosure further provides a computer-readable storage medium, which includes a computer program stored thereon. The computer program is used to cause a processor to execute the foregoing information configuring method applied to the network device. The processor-readable storage medium may be any available medium or data storage device that can be accessed by a processor, including but not limited to magnetic storage (such as floppy disk, hard disk, magnetic tape, magneto-optical disk (MO)), optical storage (such as CD, DVD, BD, HVD), and semiconductor memory (such as ROM, EPROM, EEPROM, non-volatile memory (Nand flash), solid-state drive (SSD)).

Those skilled in the art should understand that the embodiments of the present application may be provided as methods, systems, or computer program products. Accordingly, in this application, an entirely hardware embodiment, an entirely software embodiment, or an embodiment combining software and hardware aspects may be adopted. Further, this application may adopt the form of a computer program product implemented on one or more computer available storage media (including but not limited to disk memory and optical memory) including computer available program codes.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicate computer, an embedded processor or any other programmable data processing devices to create a machine, so that instructions executable by the processor of the computer or the other programmable data processing devices may create a device to achieve the functions assigned in one or more work flows in the flow chart and/or one or more blocks in the block diagram.

These processor-executable instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These processor-executable instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

It is to be noted that division of units in the embodiment of the present disclosure is only a logical function division; in actual implementation, all or part of the units may be integrated into one physical entity, or may also be physically separated. All of these units may be implemented in the form of using processing components to call software, or may be implemented by hardware, or some units are implemented in the form of using processing components to call software and some units are implemented by hardware. For example, the determination unit may be a separate processing element, or may be integrated into a chip of the above device; in addition, the determination unit may also be stored in the form of program codes in the memory of the above device, and is called by a certain processing element of the above device to execute the function of the above determination unit. The implementation of other units is similar. In addition, all or part of these units may be integrated together or implemented independently. The processing element described here may be an integrated circuit with signal processing capabilities. In the implementation process, each step of the above method or each of the above units may be completed by instructions of hardware integrated logic circuits or software in the processor element.

For example, each module, unit, sub-unit or sub-module may be one or more integrated circuits configured to implement the above method, such as one or more application specific integrated circuits (ASICs), or one or multiple digital signal processors (DSP), or one or more field programmable gate arrays (FPGA). For another example, when one of the above units is implemented in the form of using a processing element to call program codes, the processing element may be a general-purpose processor, such as a central processing unit (CPU) or other processors that can call the program codes. For another example, these units may be integrated together and implemented in the form of a system-on-a-chip (SOC).

The terms "first", "second" and the like in the description and claims of the present disclosure are used to distinguish similar objects and are not necessarily used to describe a specific order or sequence. It is to be understood that data so used are interchangeable under appropriate circumstances so that the embodiments of the disclosure described herein may be implemented, for example, in sequences other than those illustrated or described herein. In addition, the terms "including" and "having" and any variations thereof are intended to cover non-exclusive inclusions, for example, a process, method, system, product or device that includes a sequence of steps or units needs not be limited to those steps or units that are expressly listed, but may include steps or units that are not expressly listed or that are inherent to the process, method, product or device. In addition, "and/or" in the description and claims is used to indicate at least one of connected objects, for example, A and/or B and/or C, means that there are seven situations: there is A alone, there is B alone, there is C alone, there are both A and B, there are both B and C, there are both A and C, and there are A, B and C. Similarly, "at least one of A and B" in the specification and claims means that there is A alone, there is B alone, or there are both A and B.

Obviously, those skilled in the art can make various changes and modifications to the present disclosure without departing from the spirit and scope of the present disclosure. Thus, if these modifications and variations of the present disclosure fall within the scope of the claims of the present disclosure and equivalent technologies thereof, the present disclosure also intends to include these modifications and variations.

## Claims

1. An information determining method, performed by a user equipment (UE), comprising:
determining a target path according to a first condition in case that UE capability does not support simultaneous sidelink data transmission on a first path and a second path;
wherein the target path is the first path or the second path, and the first path or the second path is identified by one of the following:
a combination of a source address and a destination address of a sidelink;
a destination address of a sidelink;
a transmission direction corresponding to a sidelink;
wherein the first condition includes at least one of the following:
selecting the target path based on buffer status information corresponding to the first path and the second path, respectively;
selecting the target path based on indication information of a network device.

2. The method according to claim 1, wherein the selecting the target path based on buffer status information corresponding to the first path and the second path, respectively, includes one of the following:
selecting the target path according to a relationship between the buffer status information corresponding to the first path and the buffer status information corresponding to the second path;
selecting the target path according to a relationship between a preset buffer status threshold and each of the buffer status information corresponding to the first path and the buffer status information corresponding to the second path.

3. The method according to claim 2, wherein the selecting the target path according to a relationship between the buffer status information corresponding to the first path and the buffer status information corresponding to the second path, includes:
determining, a path corresponding to the buffer status information of a larger value between the buffer status information corresponding to the first path and the buffer status information corresponding to the second path, as the target path.

4. The method according to claim 2, wherein the selecting the target path according to a relationship between a preset buffer status threshold and each of the buffer status information corresponding to the first path and the buffer status information corresponding to the second path, includes at least one of the following:
determining a path whose buffer status information with a value greater than or equal to the preset buffer status threshold, as the target path, in case that a second condition is met;
randomly selecting a path from the first path and the second path as the target path, in case that the second condition is not met;
comparing priority relationship between first information having a data transmission requirement and the highest priority on the first path and first information having a data transmission requirement and the highest priority on the second path, and determining a path corresponding to the first information having a higher priority as the target path, in case that the second condition is not met;
wherein the first information is logical channel(s) and/or a media access control layer control element (MAC CE(s));
wherein the second condition includes one of the following:
a value of the buffer status information corresponding to one of the first path and the second path is less than the preset buffer status threshold, and a value of the buffer status information corresponding to the other one of the first path and the second path is greater than or equal to the preset buffer status threshold;
a value of the buffer status information corresponding to one of the first path and the second path is less than or equal to the preset buffer status threshold, and a value of the buffer status information corresponding to the other one of the first path and the second path is greater than the preset buffer status threshold.

5. The method according to claim 4, wherein the second condition further includes one of the following:
a priority of first data on a path whose buffer status information is of a value greater than or equal to the preset buffer status threshold, is greater than or equal to a first preset threshold;
a difference between a priority of first data on a path whose buffer status information is of a value greater than or equal to the preset buffer status threshold, and a priority of first data on a path whose buffer status information is of a value less than the preset buffer status threshold, or an absolute value of the difference, is greater than a second preset threshold;
a difference between a priority of first data on a path whose buffer status information is of a value greater than the preset buffer status threshold, and a priority of first data on a path whose buffer status information is of a value less than or equal to the preset buffer status threshold, or an absolute value of the difference, is greater than a second preset threshold;
wherein the first data is a logical channel and/or MAC CE with the highest priority and having data transmission demand on the path.

6. The method according to claim 2, wherein the method further includes: determining the buffer status information in one of the following:
a sum of buffer data volumes of all sidelink logical channel groups belonging to a same combination of source address and destination address on the path;
a sum of buffer data volumes of sidelink logical channel groups belonging to a same combination of source address and destination address and having priorities higher than a third preset threshold.

7. The method according to claim 4, wherein the preset buffer status threshold has a configuration granularity which includes at least one of the following:
based on UE configuration;
based on logical channel group configuration;
based on configuration of logical channel group set.

8. The method according to claim 4, wherein the method further includes: determining the preset buffer status threshold in a manner including at least one of the following:
pre-configured;
determining according to status of UE.

9. The method according to claim 8, wherein the determining according to status of the UE, includes:
determining to use a preconfigured preset buffer status threshold in case that the UE is in an offline state;
determining the preset buffer status threshold according to a broadcast message sent by a network device in case that the UE is in an online state and in a first state, wherein the first state is an idle state or an inactive state;
determining the preset buffer status threshold according to a broadcast message or a radio resource control (RRC) signaling sent by a network device, in case that the UE is in an online state and in a connected state.

10. The method according to claim 1, wherein the indication information is carried in sidelink grant.

11. The method according to claim 1, wherein the indication information includes at least one of the following:
a combination of a sidelink source address and a sidelink destination address;
a list of combinations of a sidelink source address and a sidelink destination address.

12. The method according to claim 1, wherein in case that the first condition includes selecting the target path based on indication information of a network device, the method further includes:
sending auxiliary information to a network device;
wherein the auxiliary information includes at least one of the following:
identity information of the UE;
sidelink target address;
transmission direction corresponding to sidelink target address;
a combination of sidelink source address and sidelink destination address;
transmission direction corresponding to sidelink source address and sidelink destination address.

13. The method according to claim 12, wherein the identity information of the UE includes at least one of the following:
UE-to-UE relay
remote UE;
UE to network device relay.

14. The method according to claim 12, wherein transmission mode of the auxiliary information includes any one of the following:
sidelink UE information (SUI);
UE sidelink Assistant Information (UAI);
sidelink RRC signaling.

15. The method according to claim 1, wherein the determining a target path according to a first condition, includes:
determining the target path according to the first condition for each sidelink grant or sidelink control information.

16. An information configuring method, performed by a network device, comprising:
sending indication information to a user equipment (UE);
wherein the indication information is used by the UE to select a target path, wherein the target path is a first path or a second path, and the first path or the second path is identified by one of the following:
a combination of a source address and a destination address of a sidelink;
a destination address of a sidelink;
a transmission direction corresponding to a sidelink.

17. The method according to claim 16, wherein before sending indication information to the user equipment, the method further includes:
receiving auxiliary information sent by the UE;
wherein the auxiliary information includes at least one of the following:
identity information of the UE;
sidelink target address;
transmission direction corresponding to sidelink target address;
a combination of sidelink source address and sidelink destination address;
transmission direction corresponding to sidelink source address and sidelink destination address.

18. The method according to claim 17, wherein the identity information of the UE includes at least one of the following:
UE-to-UE relay
remote UE;
UE to network device relay.

19. The method according to claim 18, wherein the sending the indication information to the user equipment, includes:
sending the indication information to the UE when determining that the UE is a UE-to-UE relay or a UE-to-network device relay.

20. The method according to claim 17, wherein transmission mode of the auxiliary information includes any one of the following:
sidelink UE information (SUI);
UE sidelink Assistant Information (UAI);
sidelink RRC signaling.

21. The method according to claim 16, wherein the indication information is carried in sidelink grant.

22. The method according to claim 16, wherein the indication information includes at least one of the following:
a combination of a sidelink source address and a sidelink destination address;
a list of combinations of a sidelink source address and a sidelink destination address.

23. A user equipment (UE), comprising a memory, a transceiver and a processor;
wherein the memory is used to store a computer program; the transceiver is used to send and receive data under control of the processor; and the processor is used to read the computer program in the memory and perform the following operations:
determining a target path according to a first condition, in case that UE capability does not support simultaneous sidelink data transmission on a first path and a second path;
wherein the target path is the first path or the second path, and the first path or the second path is identified by one of the following:
a combination of a source address and a destination address of a sidelink;
a destination address of a sidelink;
a transmission direction corresponding to a sidelink;
wherein the first condition includes at least one of the following:
selecting the target path based on buffer status information corresponding to the first path and the second path, respectively;
selecting the target path based on indication information of a network device.

24. The user equipment according to claim 23, wherein the processor is used to read the computer program in the memory and perform one of the following operations:
selecting the target path according to a relationship between the buffer status information corresponding to the first path and the buffer status information corresponding to the second path;
selecting the target path according to a relationship between a preset buffer status threshold and each of the buffer status information corresponding to the first path and the buffer status information corresponding to the second path.

25. The user equipment according to claim 24, wherein the processor is used to read the computer program in the memory and perform the following operations:
determining, a path corresponding to the buffer status information of a larger value between the buffer status information corresponding to the first path and the buffer status information corresponding to the second path, as the target path.

26. The user equipment according to claim 23, wherein the processor is used to read the computer program in the memory and perform at least one of the following operations:
determining a path whose buffer status information with a value greater than or equal to the preset buffer status threshold, as the target path, in case that a second condition is met;
randomly selecting a path from the first path and the second path as the target path, in case that the second condition is not met;
comparing priority relationship between first information having a data transmission requirement and the highest priority on the first path and first information having a data transmission requirement and the highest priority on the second path, and determining a path corresponding to the first information having a higher priority as the target path, in case that the second condition is not met;
wherein the first information is logical channel(s) and/or a media access control layer control element (MAC CE(s));
wherein the second condition includes one of the following:
a value of the buffer status information corresponding to one of the first path and the second path is less than the preset buffer status threshold, and a value of the buffer status information corresponding to the other one of the first path and the second path is greater than or equal to the preset buffer status threshold;
a value of the buffer status information corresponding to one of the first path and the second path is less than or equal to the preset buffer status threshold, and a value of the buffer status information corresponding to the other one of the first path and the second path is greater than the preset buffer status threshold.

27. The user equipment according to claim 26, wherein the second condition further includes one of the following:
a priority of first data on a path whose buffer status information is of a value greater than or equal to the preset buffer status threshold, is greater than or equal to a first preset threshold;
a difference between a priority of first data on a path whose buffer status information is of a value greater than or equal to the preset buffer status threshold, and a priority of first data on a path whose buffer status information is of a value less than the preset buffer status threshold, or an absolute value of the difference, is greater than a second preset threshold;
a difference between a priority of first data on a path whose buffer status information is of a value greater than the preset buffer status threshold, and a priority of first data on a path whose buffer status information is of a value less than or equal to the preset buffer status threshold, or an absolute value of the difference, is greater than a second preset threshold;
wherein the first data is a logical channel and/or MAC CE with the highest priority and having data transmission demand on the path.

28. The user equipment according to claim 24, wherein the buffer status information is determined in one of the following:
a sum of buffer data volumes of all sidelink logical channel groups belonging to a same combination of source address and destination address on the path;
a sum of buffer data volumes of sidelink logical channel groups belonging to a same combination of source address and destination address and having priorities higher than a third preset threshold.

29. The user equipment according to claim 26, wherein the preset buffer status threshold has a configuration granularity which includes at least one of the following:
based on UE configuration;
based on logical channel group configuration;
based on configuration of logical channel group set.

30. The user equipment according to claim 26, wherein the preset buffer status threshold is determined in a manner including at least one of the following:
pre-configured;
determining according to status of UE.

31. The user equipment according to claim 30, wherein the processor is used to read the computer program in the memory and perform at least one of the following operations:
determining to use a preconfigured preset buffer status threshold in case that the UE is in an offline state;
determining the preset buffer status threshold according to a broadcast message sent by a network device in case that the UE is in an online state and in a first state, wherein the first state is an idle state or an inactive state;
determining the preset buffer status threshold according to a broadcast message or a radio resource control (RRC) signaling sent by a network device, in case that the UE is in an online state and in a connected state.

32. The user equipment according to claim 23, wherein the indication information is carried in sidelink grant.

33. The user equipment according to claim 23, wherein the indication information includes at least one of the following:
a combination of a sidelink source address and a sidelink destination address;
a list of combinations of a sidelink source address and a sidelink destination address.

34. The user equipment according to claim 23, wherein in case that the first condition includes selecting the target path based on indication information of a network device, the processor is used to read the computer program in the memory and perform the following operations:
sending auxiliary information to network devices;
wherein the auxiliary information includes at least one of the following:
identity information of the UE;
sidelink target address;
transmission direction corresponding to sidelink target address;
a combination of sidelink source address and sidelink destination address;
transmission direction corresponding to sidelink source address and sidelink destination address.

35. The user equipment according to claim 24, wherein the identity information of the UE includes at least one of the following:
UE-to-UE relay
remote UE;
UE to network device relay.

36. The user equipment according to claim 34, wherein transmission mode of the auxiliary information includes any one of the following:
sidelink UE information (SUI);
UE sidelink Assistant Information (UAI);
sidelink RRC signaling.

37. The user equipment according to claim 23, wherein the processor is used to read the computer program in the memory and perform the following operations:
determining the target path according to the first condition for each sidelink grant or sidelink control information.

38. A network device, comprising a memory, a transceiver and a processor;
wherein the memory is used to store a computer program; the transceiver is used to send and receive data under control of the processor; and the processor is used to read the computer program in the memory and perform the following operations:
sending indication information to a user equipment (UE) through the transceiver;
wherein the indication information is used by the UE to select a target path, wherein the target path is a first path or a second path, and the first path or the second path is identified by one of the following:
a combination of a source address and a destination address of a sidelink;
a destination address of a sidelink;
a transmission direction corresponding to a sidelink.

39. The network device according to claim 38, wherein the processor is used to read the computer program in the memory and perform the following operations:
receiving auxiliary information sent by the UE;
wherein the auxiliary information includes at least one of the following:
identity information of the UE;
sidelink target address;
transmission direction corresponding to sidelink target address;
a combination of sidelink source address and sidelink destination address;
transmission direction corresponding to sidelink source address and sidelink destination address.

40. The network device according to claim 39, wherein the identity information of the UE includes at least one of the following:
UE-to-UE relay
remote UE;
UE to network device relay.

41. The network device according to claim 40, wherein the processor is used to read the computer program in the memory and perform the following operations:
sending the indication information to the UE, when determining that the UE is a UE-to-UE relay or a UE-to-network device relay.

42. The network device according to claim 39, wherein transmission mode of the auxiliary information includes any one of the following:
sidelink UE information (SUI);
UE sidelink Assistant Information (UAI);
sidelink RRC signaling.

43. The network device according to claim 38, wherein the indication information is carried in sidelink grant.

44. The network device according to claim 38, wherein the indication information includes at least one of the following:
a combination of a sidelink source address and a sidelink destination address;
a list of combinations of a sidelink source address and a sidelink destination address.

45. An information determination device, applied to a user equipment (UE), comprising:
a determination unit configured to determine a target path according to a first condition, in case that UE capability does not support simultaneous sidelink data transmission on a first path and a second path;
wherein the target path is the first path or the second path, and the first path or the second path is identified by one of the following:
a combination of a source address and a destination address of a sidelink;
a destination address of a sidelink;
a transmission direction corresponding to a sidelink;
wherein the first condition includes at least one of the following:
selecting the target path based on buffer status information corresponding to the first path and the second path, respectively;
selecting the target path based on indication information of a network device.

46. The device according to claim 45, wherein the selecting the target path based on buffer status information corresponding to the first path and the second path, respectively, includes one of the following:
selecting the target path according to a relationship between the buffer status information corresponding to the first path and the buffer status information corresponding to the second path;
selecting the target path according to a relationship between a preset buffer status threshold and each of the buffer status information corresponding to the first path and the buffer status information corresponding to the second path.

47. The device according to claim 46, wherein the selecting the target path according to a relationship between the buffer status information corresponding to the first path and the buffer status information corresponding to the second path, includes:
determining, a path corresponding to the buffer status information of a larger value between the buffer status information corresponding to the first path and the buffer status information corresponding to the second path, as the target path.

48. The device according to claim 46, wherein the selecting the target path according to a relationship between a preset buffer status threshold and each of the buffer status information corresponding to the first path and the buffer status information corresponding to the second path, includes at least one of the following:
determining a path whose buffer status information with a value greater than or equal to the preset buffer status threshold, as the target path, in case that a second condition is met;
randomly selecting a path from the first path and the second path as the target path, in case that the second condition is not met;
comparing priority relationship between first information having a data transmission requirement and the highest priority on the first path and first information having a data transmission requirement and the highest priority on the second path, and determining a path corresponding to the first information having a higher priority as the target path, in case that the second condition is not met;
wherein the first information is logical channel(s) and/or a media access control layer control element (MAC CE(s));
wherein the second condition includes one of the following:
a value of the buffer status information corresponding to one of the first path and the second path is less than the preset buffer status threshold, and a value of the buffer status information corresponding to the other one of the first path and the second path is greater than or equal to the preset buffer status threshold;
a value of the buffer status information corresponding to one of the first path and the second path is less than or equal to the preset buffer status threshold, and a value of the buffer status information corresponding to the other one of the first path and the second path is greater than the preset buffer status threshold.

49. The device according to claim 48, wherein the second condition further includes one of the following:
a priority of first data on a path whose buffer status information is of a value greater than or equal to the preset buffer status threshold, is greater than or equal to a first preset threshold;
a difference between a priority of first data on a path whose buffer status information is of a value greater than or equal to the preset buffer status threshold, and a priority of first data on a path whose buffer status information is of a value less than the preset buffer status threshold, or an absolute value of the difference, is greater than a second preset threshold;
a difference between a priority of first data on a path whose buffer status information is of a value greater than the preset buffer status threshold, and a priority of first data on a path whose buffer status information is of a value less than or equal to the preset buffer status threshold, or an absolute value of the difference, is greater than a second preset threshold;
wherein the first data is a logical channel and/or MAC CE with the highest priority and having data transmission demand on the path.

50. The device according to claim 46, wherein the buffer status information is determined in one of the following:
a sum of buffer data volumes of all sidelink logical channel groups belonging to a same combination of source address and destination address on the path;
a sum of buffer data volumes of sidelink logical channel groups belonging to a same combination of source address and destination address and having priorities higher than a third preset threshold.

51. The device according to claim 48, wherein the preset buffer status threshold has a configuration granularity which includes at least one of the following:
based on UE configuration;
based on logical channel group configuration;
based on configuration of logical channel group set.

52. The device according to claim 48, wherein the preset buffer status threshold is determined in a manner including at least one of the following:
pre-configured;
determining according to status of UE.

53. The device according to claim 52, wherein the determining according to status of the UE, includes:
determining to use a preconfigured preset buffer status threshold in case that the UE is in an offline state;
determining the preset buffer status threshold according to a broadcast message sent by a network device in case that the UE is in an online state and in a first state, wherein the first state is an idle state or an inactive state;
determining the preset buffer status threshold according to a broadcast message or a radio resource control (RRC) signaling sent by a network device, in case that the UE is in an online state and in a connected state.

54. The device according to claim 45, wherein the indication information is carried in sidelink grant.

55. The device according to claim 45, wherein the indication information includes at least one of the following:
a combination of a sidelink source address and a sidelink destination address;
a list of combinations of a sidelink source address and a sidelink destination address.

56. The device according to claim 45, wherein in case that the first condition includes selecting the target path based on indication information of a network device, the device further includes:
a second sending unit configured to send auxiliary information to a network device;
wherein the auxiliary information includes at least one of the following:
identity information of the UE;
sidelink target address;
transmission direction corresponding to sidelink target address;
a combination of sidelink source address and sidelink destination address;
transmission direction corresponding to sidelink source address and sidelink destination address.

57. The device according to claim 56, wherein the identity information of the UE includes at least one of the following:
UE-to-UE relay
remote UE;
UE to network device relay.

58. The device according to claim 56, wherein transmission mode of the auxiliary information includes any one of the following:
sidelink UE information (SUI);
UE sidelink Assistant Information (UAI);
sidelink RRC signaling.

59. The device according to claim 45, wherein the determining unit is specifically configured to,
determine the target path according to the first condition for each sidelink grant or sidelink control information.

60. An information configuration device, applied to a network device, comprising:
a first sending unit configured to send indication information to a user equipment (UE);
wherein the indication information is used by the UE to select a target path, wherein the target path is a first path or a second path, and the first path or the second path is identified by one of the following:
a combination of a source address and a destination address of a sidelink;
a destination address of a sidelink;
a transmission direction corresponding to a sidelink.

61. The device according to claim 60, wherein before sending indication information to the user equipment, the device is further configured to
receive auxiliary information sent by the UE;
wherein the auxiliary information includes at least one of the following:
identity information of the UE;
sidelink target address;
transmission direction corresponding to sidelink target address;
a combination of sidelink source address and sidelink destination address;
transmission direction corresponding to sidelink source address and sidelink destination address.

62. The device according to claim 61, wherein the identity information of the UE includes at least one of the following:
UE-to-UE relay
remote UE;
UE to network device relay.

63. The device according to claim 62, wherein the sending the indication information to the user equipment, includes:
sending the indication information to the UE when determining that the UE is a UE-to-UE relay or a UE-to-network device relay.

64. The device according to claim 61, wherein transmission mode of the auxiliary information includes any one of the following:
sidelink UE information (SUI);
UE sidelink Assistant Information (UAI);
sidelink RRC signaling.

65. The device according to claim 60, wherein the indication information is carried in sidelink grant.

66. The device according to claim 60, wherein the indication information includes at least one of the following:
a combination of a sidelink source address and a sidelink destination address;
a list of combinations of a sidelink source address and a sidelink destination address.

67. A processor-readable storage medium, comprising a computer program stored thereon; wherein the computer program is used to cause the processor to perform the method according to any one of claims 1 to 15 or any one of claims 16 to 22.
